**Europäisches Patentamt**

**European Patent Office**

**Office européen des brevets**

(19)

(11) Veröffentlichungsnummer: **0 030 996**
**B1**

# EUROPÄISCHE PATENTSCHRIFT

(12)

(45) Veröffentlichungstag der Patentschrift:
**16.05.84**

(21) Anmeldenummer: **80103000.8**

(22) Anmeldetag: **29.05.80**

(51) Int. Cl.³: **F 16 C 3/02**, F 16 D 1/02,
B 29 D 23/00

(54) **Antriebswelle aus faserverstärktem Kunststoff, mit verlorenem Dorn und festgewickelten Endstücken.**

(30) Priorität: **21.12.79 DE 2951629**

(43) Veröffentlichungstag der Anmeldung:
**01.07.81 Patentblatt 81/26**

(45) Bekanntmachung des Hinweises auf die Patenterteilung:
**16.05.84 Patentblatt 84/20**

(84) Benannte Vertragsstaaten:
**BE FR GB IT NL SE**

(56) Entgegenhaltungen:
**DE - A - 2 237 775**
**DE - A - 2 619 257**
**DE - A - 2 710 275**
**DE - A - 2 728 306**
**DE - A - 2 851 293**
**DE - B - 2 146 783**
**DE - U - 1 923 179**
**US - A - 3 553 978**

(73) Patentinhaber: **Felten & Guilleaume Energietechnik
GmbH, Schanzenstrasse 24, D-5000 Köln 80 (DE)**

(72) Erfinder: **Federmann, Helmut, Dr., Holunderweg 17,
D-5060 Berg.-Gladbach (DE)**
Erfinder: **Bausch, Joachim, Dr. Ing., Steeger Höhe 16,
D-5057 Dürscheid (DE)**

## Antriebswelle aus faserverstärktem Kunststoff, mit verlorenem Dorn und festgewickelten Endstücken

Die Erfindung bezieht sich auf eine Antriebswelle aus faserverstärktem Kunststoff, gemäß dem Oberbegriff des Anspruches 1. Sie findet besonders Anwendung im Fahrzeugbau als Gelenkwelle für die Kraftübertragung von dem im vorderen Teil des Fahrzeuges befindlichen Motor mit angeschlossenem Schaltgetriebe zu dem hiervon im Abstand angeordneten Differenzialgetriebe für den Antrieb der Hinterräder.

Die aus der DE-A-28 51 293 bekannte Welle weist ein aus glasfaserverstärktem Kunststoff bestehendes Hohlwellenteil auf, in dessen Enden metallische Buchsen festgelegt sind, welche die Form eines zylindrischen Ringes aufweisen und von dem Hohlwellenteil mit je einer radial auswärts gerichteten Fläche vorragen, an welche das Jochteil eines Kardangelenkes oder ein zu dessen Schweißverbindung eingerichtetes Übergangsglied angeschweißt ist. Dieses kann auch beim Auswuchten der Welle als Träger von Unwuchtausgleichsgewichten dienen.

Die Verbindung zwischen dem aus faserverstärktem Kunststoff bestehenden Wellenteil und den in dessen Enden festgelegten Anschlußbuchsen ist vorwiegend kraftschlüssig, aufgrund der Adhäsionskraft des im ungehärteten Zustand um deren Außenfläche gewickelten faserverstärktem Kunststoffmaterials nach dessen Erhärtung. Der Zusammenhalt dieser Teile kann ferner durch die Ausbildung einer ringförmigen, radial abstehenden Rippe an jeder dieser Buchsen sowie gegebenenfalls durch warzenartige Vorsprünge ihrer Oberfläche und diesen sowie der Rippe angepaßter Innenform des Hohlwellenteiles erhöht werden. Es wurde jedoch gefunden, daß diese Einbindung der Anschlußbuchsen an den Wellenenden für den Dauerbetrieb einer solchen Antriebswelle mit den hierbei unvermeidlichen Wechselbelastungen und Vibrationen unzureichend, und daher die Lebensdauer der so ausgestalteten Antriebswellen relativ gering ist. Darüberhinaus ist die abrupte Durchmesserverringerung des Hohlwellenteiles etwa am inneren Ende jeder seiner Anschlußbuchsen für den stetigen Kraftfluß von dem einen zum anderen Ende der Welle für deren mechanische Festigkeit unzuträglich, was die übertragbare Leistung vermindert, bzw. im Extremfall zum Bruch der Antriebswelle an diesen Stellen führen kann.

Nun ist bereits in der DE-A-26 19 257 ein rohrförmiges Bauelement gezeigt und beschrieben, bei dem das Endstück aus Metall wie folgt ausgebildet ist: Innenabschnitt mit einem dem Rohr angepaßten Durchmesser und einer nach innen abnehmenden Wandstärke, Übergangsabschnitt zur Durchmesserverringerung und Außenabschnitt mit kleinerem Durchmesser und gleichmäßiger Wandstärke, wobei der Außenabschnitt zum Teil aus der Faser-Kunststoff-Wicklung vorragt und eine Verbindungseinrichtung aufnimmt. Zwar ist dieses Bauelement gegenüber der vorbeschriebenen Antriebswelle bereits auf höhere Festigkeitswerte hin verbessert, aber es hat noch einige Nachteile wie: Bei einer Zugbelastung ist infolge der Keilwirkung der konischen Fläche des Innenabschnitts des Endstücks eine Rißbildung in der Faser-Kunststoff-Wicklung nicht ganz auszuschließen. Der Übergang vom Innen- zum Außenabschnitt des Endstücks hat die Form eines abgeflachten S, und die Wicklung darüber endet mit einer eckigen Fläche, was hinsichtlich der Festigkeitswerte noch nicht optimal ist. Besonders aufwendig ist, daß auf den Außenabschnitt des Endstücks eine ebenfalls S-förmige Überwurfmutter aufgeschraubt werden muß, welche über die Wicklung ragt und diese gegen das Endstück klemmt.

Daher liegt der Erfindung die Aufgabe zugrunde, Aufbau und Herstellung einer solchen Welle zu vereinfachen, dabei aber die Festigkeitswerte der Welle noch zu verbessern, damit sie bei geringem Materialaufwand und entsprechend kleinem Leistungsgewicht möglichst große Leistungen sicher und dauerhaft übertragen kann, und damit die Lebensdauer dieser Welle ebenso wie die hiermit übertragbare Leistung zumindest ebenso groß ist, wie jene vergleichbarer Stahlwellen.

Diese Aufgabe wird erfindungsgemäß mit den kennzeichnenden Merkmalen des Anspruchs 1 gelöst. Sie betreffen im wesentlichen die Ausbildung des Endstücks und seine Einbindung in die Faser-Kunststoff-Wicklung. Die Ansprüche 2 und 3 betreffen dann die Ausbildung des Außen- bzw. Innenabschnitts des Endstücks, die Ansprüche 4 und 5 die Verwendung von vorgefertigten Faser-Kunststoff-Lagen bzw. die Steigung der Wicklung und das Dazwischenschieben von imprägniertem Fasergewebe oder -vlies.

Der Erfindung liegt die Erkenntnis zugrunde, daß für eine dauerhafte feste Einkapselung der Endstücke in den Endbereichen des Hauptteiles der Welle über die sich aus dem Herstellungsverfahren zwangsläufig ergebende kraftschlüssige Verbindung zufolge der Adhäsionskraft des aufgebrachten faserverstärkten Kunststoffmaterials hinaus auch noch eine möglichst umfassende formschlüssige Einbindung der Endstücke in dieses erforderlich ist, dergestalt, daß die sich insbesondere aus der ständig wiederkehrenden Biegung und aus sonstigen Ursachen ergebenden Zugbeanspruchungskomponenten schadlos aufgenommen werden können. Hinzu kommt ferner die Erkenntnis, daß die Kraftübertragung optimal durch einen stetigen Kraftfluß gewährleistet ist, der durch entsprechende Gestaltung und allmählichen Übergang der Endstücke auf den Querschnitt des Wellenhauptteiles bewirkt wird. All dies bringt die Vorteile einer erhöhten Festigkeit, Dauerbelastbarkeit und Bruchsicherheit dieser Welle bei geringem Gewicht derselben sowie die Möglichkeiten einer äußerst wirtschaftlichen Fertigung mit sich.

Nachstehend ist die Erfindung anhand eines in der Zeichnung veranschaulichten Ausführungsbeispieles, unter Angabe weiterer Merkmale Einzelheiten und Vorteile derselben näher erläutert. In der Zeichnung zeigt

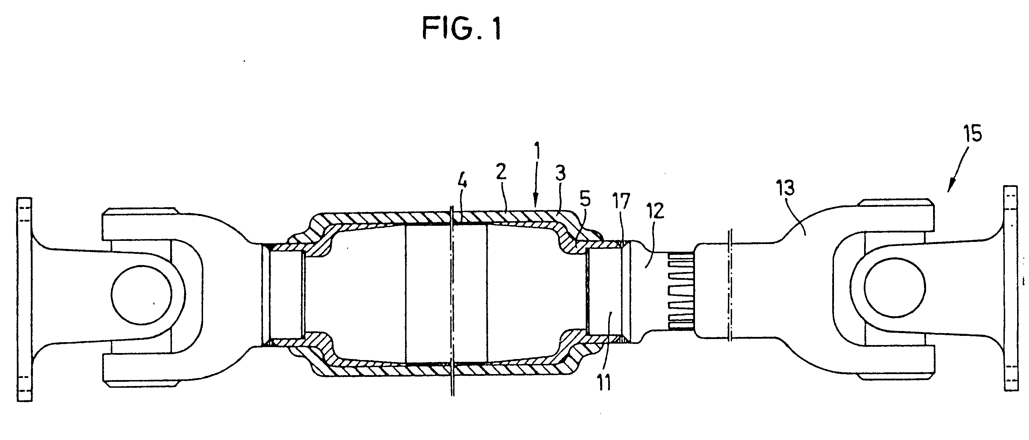

Fig. 1 im Längsschnitt eine etwa mittig unterbrochene Antriebswelle nach der Erfindung und

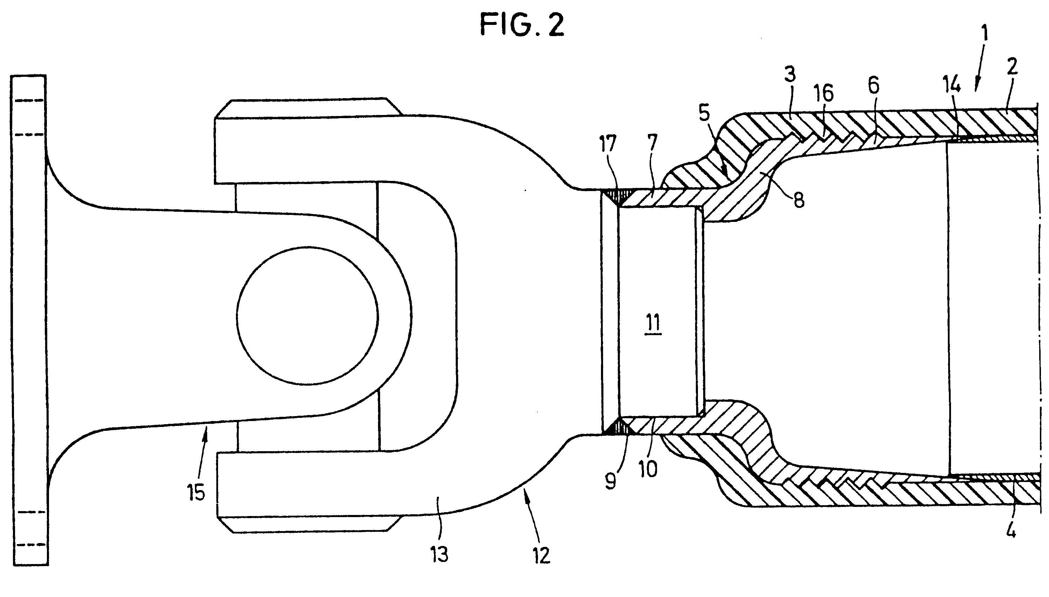

Fig. 2 in vergrößerter Darstellung und ebenfalls im Längsschnitt einen Endabschnitt dieser Welle mit fest angeschlossener Verbindungseinrichtung.

Die gezeigte Antriebswelle 1 weist einen rohrförmigen Hauptteil 2 aus faserverstärktem Kunststoff auf, der einen vorgefertigten, permanent eingebetteten verlorenen Dorn 4 fest umfaßt. Der Hauptteil 2 besteht aus mehreren Lagen hochfester, in einer Matrix aus durch Wärmeeinwirkung gehärtetem Kunststoff eingebetteter Fasern, die im Zuge der Fertigung in an sich bekannter Weise bei noch ungehärtetem Zustand ihrer Kunststoffimprägnierung auf den Dorn 4 aufgebracht, insbesondere aufgewickelt werden. Hierzu ist es besonders vorteilhaft, wenn zumindest ein Teil der Wickellagen des Hauptteiles 2 der Antriebswelle 1 aus vorimprägnierten, durch unmittelbare Wärmeeinwirkung zugleich mit dem Wickelvorgang gehärteten Glas- oder Kohlefaser-Rovings, auch Prepregs genannten, besteht, wobei zumindest die innerste und die äußerste Wickellage aus Kohlefaser-Prepregs besteht. Dies bringt die Vorteile einer vereinfachten Fertigung mit sich, bei gleichzeitiger Berücksichtigung der erhöhten Beanspruchung der Randschichten des Hauptteiles 2 sowohl durch den Kraftfluß von den darin eingekapselten Endstücken 3 als auch durch die größeren Zug- und Druckbeanspruchungen ihrer äußersten Phase zufolge der trotz erhöhter Steifigkeit der Welle unvermeidlichen Biegungen derselben im Betrieb.

Zur erhöhten Festigkeit dieser Welle kann in bevorzugter Ausführung derselben auch noch dadurch beigetragen werden, daß benachbarte Wickellagen des Wellenhauptteiles 2 aus den mit härtbarem Kunststoff getränkten, hochfesten Glas-, Kohle- oder Kunststofffasern bzw. Faserverbänden in miteinander kreuzenden Windungen, bei unterschiedlicher Steigung der Windungen jeder Lage, und die innerste und die äußerste Lage mit geringstmöglicher Steigung gewickelt sind. Dies gewährleistet die gleichmäßige gute Adhäsion der innersten Lage am Dorn und insbesondere an den darin eingebetteten Endstücken sowie eine glatte und abriebfeste Oberfläche der äußersten Lage. Ferner ist es vorteilhaft, wenn wenigstens zwischen zwei benachbarten Wickellagen des Hauptteiles 2 der Welle darin ein mit dem härtbaren Kunststoff getränktes Gewebe oder Faservlies aus hochfesten Fasern eingewickelt ist, welches bei relativ geringem Fertigungsaufwand ebenfalls zur erhöhten Dauerstandsfestigkeit der Welle beiträgt. In den Endbereichen 3 des Hauptteiles 2 sind die Wickellagen durch zusätzliche Bewicklungen verstärkt, welche einen wesentlichen Teil jedes der Endstücke 5 der Welle 1 fest umschließen.

Diese Endstücke 5 sind als rotationssymmetrische Körper aus Metall, mit je einem inneren und einem äußeren Zylinderabschnitt 6 bzw. 7 unterschiedlichen Außendurchmessers sowie mit einem diese verbindenden Übergangsabschnitt 8 mit einem abgerundeten, gegen den äußeren Zylinderabschnitt 7 an Wandstärke zunehmenden Querschnittprofil ausgebildet. Sie ragen nur mit ihrem äußeren Zylinderabschnitt 7 ein wenig, jedoch für den nachfolgenden Schweißvorgang ausreichend aus dem betreffenden Ende des Hauptteiles 2 der Welle vor. An jedem dieser Endstücke 5 ist eine Verbindungseinrichtung 12, z. B. das Jochteil 13 eines Kreuzgelenkes 15 fest angeschweißt oder dauerhaft hart angelötet, je nach dem zur Bildung des Endstückes 5 bzw. der Verbindungseinrichtung 12 verwendeten Metall, insbesondere Stahl oder eine Leichtmetallegierung.

Der innere Zylinderabschnitt 6 jedes der Endstücke 5 weist einen im wesentlichen dem verlorenen, voll oder hohl ausgebildeten Dorn 4 angepaßten Außendurchmesser und ein gegen den Übergangsabschnitt 8 an Wandstärke allmählich zunehmendes Querschnittsprofil auf, welches mit weiter zunehmender Wandstärke in jenes des Übergangsabschnittes 8 eingeht. Aus dem äußeren Zylinderabschnitt 7 geringeren Durchmessers ist eine konzentrische Bohrung 10 für den Zentrieransatz 11 der Verbindungseinrichtung 12 ausgenommen. Diese kann das Jochteil 13 eines Kreuzgelenkes 15 oder auch ein genuteter Wellenstummel sein, auf welchen ein mit einer entsprechenden Bohrung ausgebildetes Jochteil oder eine andere Anschlußeinrichtung wie Kupplungsflansch oder dergleichen aufgeschoben werden kann. Die drehsichere und zugleich gleitfähige Verbindung eines der Jochteile 13 schafft die Möglichkeit für den selbsttätigen Längenausgleich der Welle 1, in Anpassung an unterschiedliche Betriebsbedingungen.

Dem mit konisch abnehmendem Profil ausgebildeten inneren Zylinderabschnitt 6 der Endstücke 5 ist jedes der Enden des verlorenen Dornes 4 so angepaßt, daß die Endstücke 5 vor dem Wickelvorgang auf den Dorn 4 ein wenig aufgeschoben werden können und auf diesem bereits in einer der vorgegebenen Gesamtlänge entsprechenden Lage festsitzen, ehe das Hauptteil 2 der Welle 1, einschließlich der Endstücke 5 mit dem faserverstärktem Kunststoff bewickelt wird, nach dessen Erhärtung jedes derselben in dieser vorgegebenen Lage dauerhaft verbleibt und mit dem Hauptteil 2 der Welle 1 eine untrennbare Einheit vorbestimmter Gesamtlänge bildet.

Für die Löt- oder Schweißbefestigung der Verbindungseinrichtungen 12 ist die stirnseitige Endfläche 9 des vorragenden äußeren Zylinderabschnittes 7 jedes der Endstücke 5 sowie jene der mittels einer V-Schweißnaht 17 angeschlossenen Verbindungs- bzw. Übertragungseinrichtung 12 gegenläufig konisch abgeschrägt. Ferner ist es vorteilhaft, wenn die Endstücke 5 zur Erhöhung der Drehsicherheit ihrer formschlüssigen Verbindung mit den Endbereichen 3 des Hauptteiles 2 der Welle, in dem sie fest eingekapselt sind, mit Erhebungen und/oder Vertiefungen wie Rillen, Warzen, Riefelung oder Kreuzgewinde zumindest an der Oberfläche 16 des inneren Zylinderabschnittes 6, vorzugsweise auch an dem umwickelten Teil des äußeren Zylinderabschnittes 7 versehen sind.

In bevorzugter Ausführungsform sind der innere Zylinderabschnitt 6 jedes der Endstücke 5 mit sich im Längsschnitt gegen sein inneres Ende bis auf ein Mindestmaß konisch verjüngendem Profil, und jedes der Enden 14 des Hohldornes 4 diesem Profil entsprechend, ebenfalls konisch ausgebildet, und von dem Endbereich des betreffenden Zylinderabschnittes 6 der beiden Endstücke 5 auf ein vorgegebenes Übermaß umfaßt. Dadurch ergibt sich der vorausgehend beschriebene feste Sitz der Endstücke 5 am Dorn 4 vor und während des Wickelvorganges zum Aufbau des Hauptteiles 2 der Welle 1 sowie eine genau vorgegebene Gesamtlänge derselben. Je nach den speziellen Anforderungen, für welche diese Antriebswelle ausgelegt ist, bzw. unter Berücksichtigung der Wirtschaftlichkeit ihrer Fertigung kann der verlorene Dorn 4 als Hohldorn in rohrförmigen Standardlängen aus Leichtmetall, Kunststoff oder Hartpapier, also in Form einer langen dünnen Hülse oder auch in vollen Standardlängen aus einem Kunststoff, insbesondere einem Hartschaumstoff, z. B. aus Polyurethan oder Polystyrolschaum, also in der Form eines leichtgewichtigen Zylinders vorgefertigt sein. Diese lassen sich in hohen Stückzahlen besonders wirtschaftlich erstellen und besitzen bei ausreichender mechanischer Festigkeit ein besonders geringes Eigengewicht.

**Patentansprüche**

1. Antriebswelle bestehend aus einem Rohr (2) aus faserverstärktem Kunststoff, das auf einen verlorenen Dorn (4) gewickelt ist, und in das an jedem Ende ein rohrförmiges Endstück (5) aus Metall fest eingewickelt ist, wobei

a) das Endstück (5) wie folgt ausgebildet ist: Innenabschnitt (6) mit einem dem Rohr (2) angepaßten Durchmesser und einer nach innen abnehmenden Wandstärke, Übergangsabschnitt (8) zur Durchmesserverringerung und Außenabschnitt (7) mit kleinerem Durchmesser und gleichmäßiger Wandstärke, und

b) der Außenabschnitt (7) zum Teil aus der Faser-Kunststoff-Wicklung vorragt und eine Verbindungseinrichtung aufnimmt,

dadurch gekennzeichnet, daß

c) Innen- und Außenabschnitt (6, 7) des Endstücks (5) zylindrisch sind und der Übergang (8) die Form eines steilen S hat, und

d) die Lagen der Faser-Kunststoff-Wicklung in den Endbereichen (3) und damit über dem Übergang (8) durch zusätzliche Bewicklungen verstärkt sind und einen wesentlichen Teil des Außenabschnitts (7) des Endstücks fest umfassen.

2. Antriebswelle nach Anspruch 1, dadurch gekennzeichnet, daß der Außenabschnitt (7) des Endstücks eine konzentrische Bohrung (10) für den Zentrieransatz (11) einer Verbindungseinrichtung (12) hat, und daß seine Endfläche (9) und die Endfläche der Verbindungseinrichtung gegenläufig konisch abgeschrägt und mittels einer V-Schweißnaht (17) miteinander verbunden sind.

3. Antriebswelle nach Anspruch 2, dadurch gekennzeichnet, daß die schräg verlaufende Innenfläche des Innenabschnittes (6) am Ende die entsprechend schräg verlaufende Außenfläche des Dorns (4) auf ein vorgegebenes Übermaß umfaßt, und daß die Außenfläche des Innenabschnittes (6) in an sich bekannter Weise mit Erhebungen und/oder Vertiefungen (16) ausgebildet ist.

4. Antriebswelle nach einem der Ansprüche 1 bis 3, dadurch gekennzeichnet, daß zumindest ein Teil der Wickellagen des Rohres (2) aus vorgefertigten, vorimprägnierten, teilgehärteten und beim Wickelvorgang ausgehärteten Glas- oder Kohlefaser-Lagen (Prepregs), und die in an sich bekannter Weise aus Kohlefasern bestehende innerste und äußerste Lage aus Kohlefaser-Prepregs besteht.

5. Antriebswelle nach einem der Ansprüche 1 bis 4, dadurch gekennzeichnet, daß bei den Wickellagen des Rohres (2),

a) die in an sich bekannter Weise aus mit wärmehärtbarem Kunststoff getränkten Glas-, Kohle- oder Kunststoff-Fasern bzw. -Faserverbänden bestehen, deren Windungen sich kreuzen,

b) die innerste und die äußerste Lage mit geringstmöglicher Steigung, jedoch die übrigen Lagen mit gegeneinander unterschiedlicher Steigung, gewickelt sind, und

c) wenigstens zwischen zwei benachbarten Wickellagen ein mit dem härtbaren Kunststoff getränktes Gewebe oder Vlies aus hochfesten Fasern angeordnet ist.

**Claims**

1. A driving shaft comprising a tube (2) of fibre-reinforced synthetic material, which is wound on to a lost mandrel (4) and in each end of which a tubular end piece (5) of metal is tightly enclosed, in which

a) the end piece (5) is constituted as follows: an inner portion (6) with a diameter adapted to the tube (2) and with an internally diminishing wall thickness, a transition portion (8) for reducing the diameter and an outer portion (7) with a smaller diameter and uniform wall thickness, and

b) the outer portion (7) partially projects from the fibre/synthetic material winding and receives a connexion device,

characterized in that

c) the inner and outer portions (6 and 7) of the end piece (5) are cylindrical and the transistion (8) has a steep S shape, and

d) the layers of the fibre/synthetic material winding are reinforced by additional windings in the end regions (3) and beyond the transition (8) and tightly cover a substantial part of the outer portion (7) of the end piece.

2. A driving shaft according to claim 1, characterized in that the outer portion (7) of the end piece has a concentric bore (10) for the spigot (11) of a connexion device (12), and its end face (9) and the end face of the connexion device are conically bevelled in opposite directions and are joined together by means of a V-shaped welding seam (17).

3. A driving shaft according to claim 2, characterized in that the obliquely extending inner surface of the inner portion (6) has a predetermined excess dimension at the end of the outer surface of the mandrel (4) which extends correspondingly obliquely, and the outer surface of the inner portion (6) is formed with raised and/or depressed portions (16) in a manner known per se.

4. A driving shaft according to any one of claims 1 to 3, characterized in that at least part of the winding layers of the tube (2) consists of pre-farbricated, pre-impregnated, selectively hardened glass or carbon fibre layers (prepregs) hardened during the windig process, and the innermost and outermost layer consisting of carbon fibres in a manner known per se consist of carbon fibre prepregs.

5. A driving shaft according to any one of claims 1 to 4, characterized in that, in the winding layers of the tube (2),

a) which consist of glass, carbon or synthetic material fibres or fibre bonds saturated with thermosetting synthetic material in a manner known per se and the windings of which intersect,

b) the innermost and the outermost layer are wound with the minimum pitch, but the other layers are wound with differing pitches, and

c) a fabric or fleece of high-strength fibres saturated with the hardening synthetic material is interposed at least between two adjacent winding layers.

## Revendications

1. Arbre d'entraînement consistant en un tuyau (2) en matière synthétique renforcée avec des fibres, qui est enroulé sur un mandrin perdu (4), et dans chaque extrémité duquel est insérée rigidement une pièce d'extrémité (5) en métal, la pièce d'extrémité (5) étant constituée par une portion intérieure (6) d'un diamètre adapté au tuyau (2), et avec une épaisseur de paroi diminuant vers l'intérieur, une portion de transition (8) vers la réduction de diamètre, et une portion extérieure (7) de diamètre plus réduit et d'épaisseur de paroi constante, la portion extérieure (7) dépassant vers l'avant au-delà de l'enroulement en matière synthétique, et recevant une installation de liaison de raccordement de l'arbre, arbre caractérisé en ce que la portion intérieure (6) et la portion extérieure (7) de la pièce d'extrémité (5) sont de forme cylindrique et la portion de transition (8) inclinée présente une section transversale en forme de S, les couches de l'enroulement en matière synthétique renforcée par fibres, dans les zones d'extrémité (3) et au-dessus de la portion de transition (8), étant renforcées par des enroulements supplémentaires et elles entourent rigidement une partie importante de la portion extérieure (7) de la pièce d'extrémité.

2. Arbre d'entraînement suivant la revendication 1, caractérisé en ce que la portion extérieure (7) de la pièce d'extrémité est pourvue d'un alésage concentrique (10) pour recevoir l'appendice de centrage (11) d'une installation de liaison (12), et sa surface d'extrémité (9) ainsi que la surface d'extrémité de l'installation de liaison sont biseautées en cône et sont reliées entre elles par un cordon de soudage en V (17).

3. Arbre d'entraînement selon la revendication 2, caractérisé en ce que la surface intérieure oblique de la partie d'extrémité intérieure (6) entoure, sur une certaine longueur, la surface extérieure de même obliquité du mandrin (4) et cette surface intérieure (6) est pourvue, d'une manière connue, de verrues saillantes et/ou de creux (16).

4. Arbre d'entraînement suivant l'une quelconque des revendication 1 à 3, caractérisé en ce que, au moins une partie des couches d'enroulement du tuyau (2) consiste en couches de fibres de verre ou de carbone préfabriquées, pré-imbriquées, partiellement durcies et durcissant lors de l'opération d'enroulement, et les couches la plus intérieure et la plus extérieure, consistant, de manière connue en fibres de carbone, sont constitués par des couches préfabriquées, couramment désignées sous le nom de »prepregs«.

5. Arbre d'entraînement suivant l'une quelconque des revendications 1 à 4, caractérisé en ce que, dans les couches d'enroulement du tuyau,

a) ces couches consistent, d'une manière connue, en fibres ou bandes de fibres de verre, de carbone ou de matières synthétiques, imriquées avec une matière synthétique durcissable à chaud, dont les spires d'enroulement se croissent,

b) la couche la plus intérieure et la couche la plus extérieure sont enroulées avec un faible pas, tandis que les autres couches sont enroulées avec des pas différents opposés,

c) entre deux couches d'enroulement voisines, est disposée une patte ou une nappe de fibres à haute résistance, imprégnée avec la matière synthétique durcissable.

# FIG.1

0 030 996

# FIG. 2

0 030 996